Europäisches Patentamt

European Patent Office

Office européen des brevets

(11) Numéro de publication : **0 543 701 A1**

## (12) DEMANDE DE BREVET EUROPEEN

(21) Numéro de dépôt : 92403027.3

(51) Int. Cl.⁵ : **H01G 4/30, B26D 1/143**

(22) Date de dépôt : **10.11.92**

(30) Priorité : **22.11.91 FR 9114410**

(43) Date de publication de la demande :
**26.05.93 Bulletin 93/21**

(84) Etats contractants désignés :
**DE FR**

(71) Demandeur : **COMPAGNIE EUROPEENNE DE COMPOSANTS ELECTRONIQUES LCC**
**50, rue Jean-Pierre Timbaud**
**F-92400 Courbevoie (FR)**

(72) Inventeur : **Pageaud, Michel**
**Thomson-CSF, SCPI, 50 rue J.P. Timbaud**
**F-92402 Courbevoie Cédex (FR)**
Inventeur : **Chapas, Nicolas**
**Thomson-CSF, SCPI, 50 rue J.P. Timbaud**
**F-92402 Courbevoie Cédex (FR)**

(74) Mandataire : **Guérin, Michel et al**
**THOMSON-CSF, SCPI, B.P. 329, 50, rue Jean-Pierre Timbaud**
**F-92402 Courbevoie Cédex (FR)**

(54) **Procédé de fabrication d'un condensateur feuilleté.**

(57)    La présente invention concerne un procédé de fabrication d'un condensateur feuilleté, découpé en bloc unitaire par une fraise-scie (17) circulaire dans un ruban capacitif (11). La fraise-scie (17) tourne autour d'un axe passant par un point (G) de rotation décalé par rapport du centre (18) de la fraise-scie (17).
    Application : fabrication de condensateur à film diélectrique métallisé.

FIG. 2A

La présente invention concerne un procédé de fabrication d'un condensateur feuilleté, découpé en bloc unitaire, à partir d'un ruban capacitif réalisé par empilage ou bobinage de films diélectriques métallisés.

La fabrication de condensateurs feuilletés à partir de films diélectriques métallisés est connue. On utilise généralement des films plastiques comportant une zone métallisée et une marge latérale non métallisée. On superpose deux films, leurs marges latérales non métallisées étant sur des côtés opposés afin d'obtenir une paire de films constituée d'un film de rang pair et d'un film de rang impair. On enroule sur une roue de grand diamètre, au moins une paire de films métallisés suivant un nombre de tours déterminé. On obtient ainsi un ruban capacitif comportant des couches de rang pair et impair alternées, appelé condensateur-mère. On recouvre ensuite avec un métal (ou alliage) chacun des flancs du ruban capacitif afin de réaliser des armatures de sortie. Chaque armature de sortie permet de relier mécaniquement et électriquement entre elles les métallisations des couches de même rang. Cette opération réalisée par projection de métal en fusion, est connue sous la dénomination de schoopage. Pour terminer, on procède à la découpe du ruban en blocs unitaires, en général de forme parallépipèdique. On procède enfin à la soudure des brins de connexions, s'il y a lieu, sur les armatures de sortie, et, de façon optionnelle, on recouvre le condensateur d'un revêtement protecteur, par exemple en résine époxy.

Cette découpe en bloc unitaire est toujours délicate compte tenu de la faible épaisseur des films métallisés (quelques microns) et entraîne, parfois, la détérioration en surface des flancs découpés des blocs.

La découpe se fait avec une fraise-scie circulaire tournant autour d'un axe passant par son centre. Son diamètre est bien plus grand que l'épaisseur du ruban capacitif à découper. La fraise-scie attaque transversalement le ruban capacitif, c'est à dire sensiblement perpendiculairement aux armatures. L'axe de rotation de la fraise-scie est situé sensiblement dans le plan médian du ruban capacitif.

Lorsqu'il sont détériorés, les flancs découpés des blocs peuvent être le siège de courts-circuits entre une couche paire et une couche impaire. Ces courts-circuits sont créés par le dégagement de copeaux par la denture de la fraise-scie. Ce dégagement blesse la surface de coupe. Les courts-circuits détériorent les propriétés électriques du condensateur qui peut même devenir inutilisable.

La présente invention vise à remédier à cet inconvénient en proposant un procédé de fabrication d'un condensateur feuilleté à partir d'un ruban capacitif découpé en bloc unitaire. Ce procédé ne détériore pas les faces tranchées du bloc unitaire.

La présente invention propose un procédé de fabrication d'un condensateur feuilleté, découpé en bloc unitaire par une fraise-scie dans un ruban capacitif. La fraise-scie tourne autour d'un axe passant par un point de rotation décalé par rapport à son centre.

Le ruban capacitif comporte sur deux flancs opposés des armatures métalliques, la direction d'avance de la fraise-scie est sensiblement normale aux armatures.

L'axe de rotation de la fraise-scie est soit situé dans un plan médian du ruban capacitif, soit est décalé par rapport au plan médian. Il est de préférence au dessus du plan médian, lorsqu'il est décalé.

La direction d'avance de la fraise-scie est soit parallèle au plan médian soit oblique.

La fraise-scie comporte une ou plusieurs dents utilisées à couper sur une partie de sa périphérie la plus éloignée du point de rotation. Le reste de la périphérie peut comporter une ou plusieurs dents ou bien être sans dent.

La distance entre le point de rotation et le centre de la fraise-scie est supérieure ou égale à : (1-k) . A/N; k étant le pourcentage de périphérie comportant une ou plusieurs dents utilisées à découper, A l'avance de la fraise-scie en millimètre par seconde et N la vitesse de rotation de la fraise-scie en tour par seconde.

D'autres avantages et caractéristiques de l'invention apparaitront à la lecture de la description suivante, illustrée par les dessins annexés qui représentent:

- la figure 1A, une vue en coupe d'un ruban capacitif pendant l'opération de coupe selon un procédé connu;
- la figure 1B, une face de coupe d'un condensateur, obtenu par le procédé connu;
- la figure 2A, une vue en coupe d'un ruban capacitif pendant l'opération de coupe selon un procédé conforme à l'invention;
- la figure 2B, une face de coupe d'un condensateur, obtenu par le procédé conforme à l'invention;
- la figure 3, la génératrice engendrée par les mouvements de la fraise-scie lors de la découpe d'un condensateur obtenu par le procédé conforme à l'invention;
- la figure 4, une vue en coupe d'un ruban capacitif pendant l'opération de coupe, selon une variante du procédé conforme à l'invention;
- la figure 5, une vue en coupe d'un ruban capacitif pendant l'opération de coupe, selon une autre variante du procédé conforme à l'invention.

Sur ces figures les mêmes éléments portent les mêmes références. Pour des raisons de clarté le proportions ne sont pas respectées.

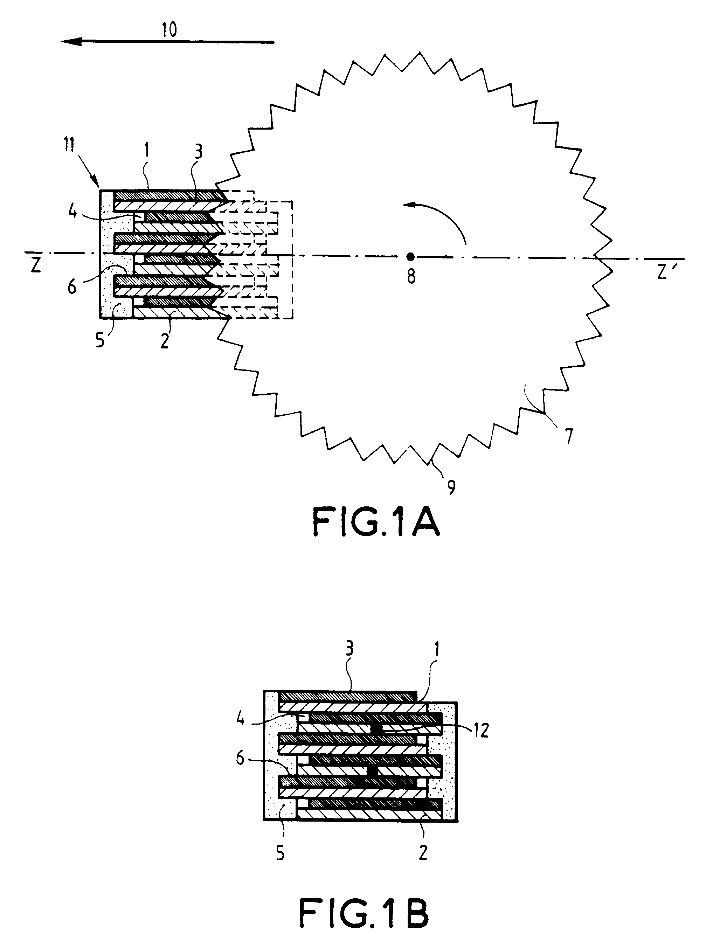

La figure 1A représente un ruban capacitif 11 pendant une opération de coupe classique, en vue d'obtenir un condensateur feuilleté unitaire. La figure 1B représente une face de coupe du condensateur feuilleté obtenu.

Le ruban capacitif 11 a été réalisé par la technique connue du bobinage sur une roue de grand diamètre. On utilise des films diélectriques 1,2 comportant sur une face une zone métallisée 3 et une marge latérale 4 non métallisée. On superpose deux films. Un des films 1, dit de rang impair, a sa marge 4 non métallisée d'un côté. L'autre film 2, dit de rang pair, a sa marge 4 de l'autre côté. On enroule sur la roue, au moins une paire de films, superposés suivant un nombre de tours déterminé. On obtient un ruban capacitif 11 comportant des films 1 de rang impair et des films 2 de rang pair alternés. On recouvre ensuite avec un métal ou un alliage chacun des flancs du ruban capacitif 11 afin de réaliser des armatures 5 de sortie. Cette opération est connue sous le nom de shoopage. Chaque armature 5 permet de relier mécaniquement et électriquement entre elles les métallisations des films 1,2 de même rang pair ou impair. Pour améliorer les résultats de l'opération de schoopage on peut décaler les films 1 impairs par rapport aux films 2 pairs pendant l'opération de bobinage. Le décalage porte la référence 6 et est appelé débord.

L'opération suivante consiste à couper le ruban capacitif 11 en blocs unitaires généralement parallélpipédiques.

La coupe est assurée par une fraise-scie 7 en forme de disque dont la périphérie comporte des dents 9. Elle tourne autour d'un axe passant par son centre 8. L'axe est normal au plan de la frais-scie 7 et ne se voit pas sur la figure 1A.

Le déplacement de la fraise-scie 7 est sensiblement perpendiculaire aux armatures 5. La direction de sciage est référencée 10.

Le centre 8 de la fraise-scie 7 est sensiblement dans un plan médian du ruban capacitif 11. Ce plan passe par l'axe ZZ' représenté sur la figure 1A. On s'aperçoit que la surface de coupe est loin d'être parfaite. Des ponts de liaison 12 se sont formés entre des films 1 et 2 de rangs différents. Chaque dent 9 arrache des copeaux dans la matière du ruban capacitif 11. Une partie de ces copeaux fond à la surface de coupe et favorise le collage des films 1 et 2. En effet il se produit un échauffement lors de la coupe.

Une autre partie est dégagée par les dents 9 grâce à la force centrifuge et à un système d'aspiration souvent prévu. Mais il arrive que le dégagement des copeaux détériore la surface de coupe et crée ainsi des ponts de liaison 12 qui mettent en court-circuit des films 1,2 de rangs différents.

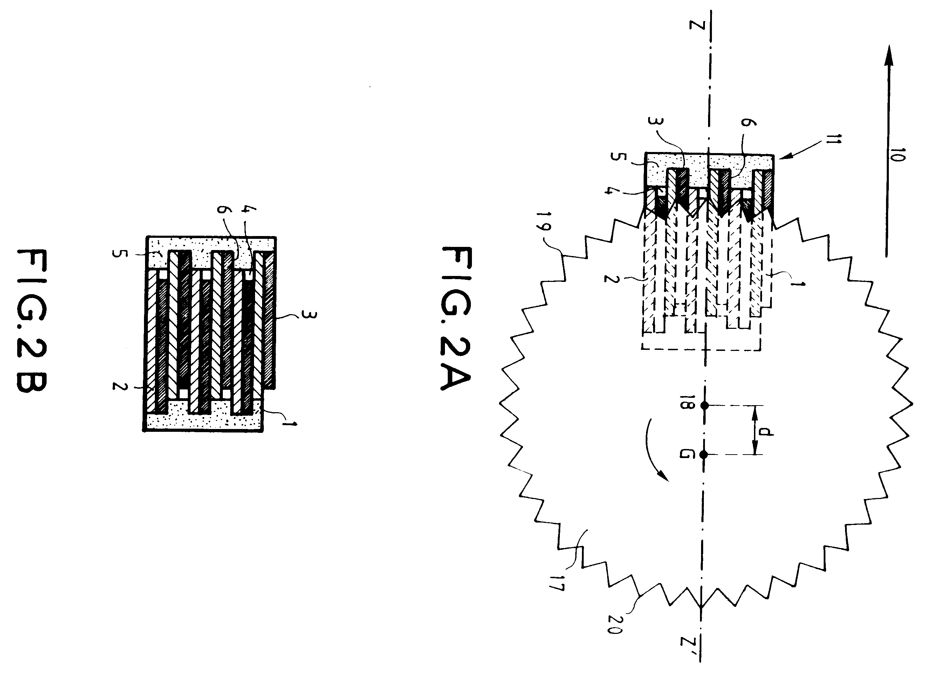

La figure 2A représente la coupe d'un ruban capacitif en condensateurs unitaires feuilletés par un procédé conforme à l'invention. La figure 2B montre une face de coupe d'un condensateur feuilleté obtenu par le procédé.

Le ruban capacitif 11 est identique à celui de la figure 1A. La principale différence se situe au niveau de la fraise-scie 17. Elle est toujours en forme de disque, de rayon R. La périphérie du disque comporte des dents 19,20. Au lieu de tourner autour d'un axe passant par le centre 18 du disque, elle tourne maintenant autour d'un axe décalé d'une distance $\underline{d}$ par rapport au centre 18. Cet axe est normal au plan de la fraise-scie 17. Il est représenté par le point G.

Le déplacement de la fraise-scie 17 se fait toujours sensiblement perpendiculairement aux armatures 5. La direction de déplacement est mentionnée avec la référence 10.

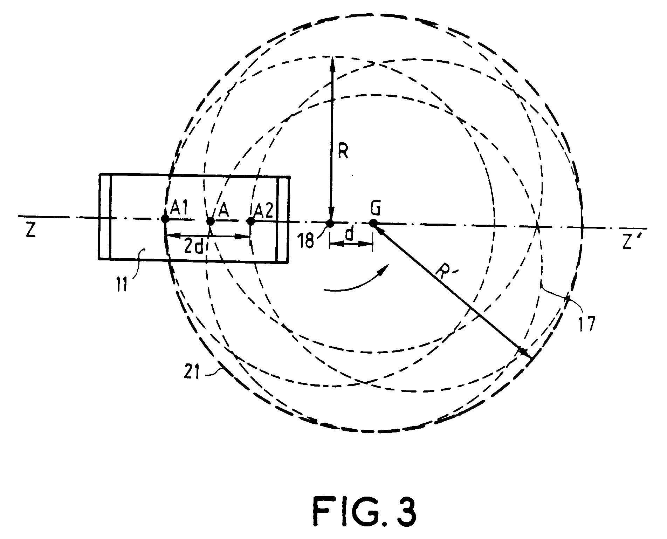

On se referre à la figure 3. La génératrice 21 engendrée par la rotation de la fraise-scie 17 est alors un cercle agrandi. Ce cercle a pour rayon R' :

$$R' = R + d$$

Grâce au décalage de l'axe de rotation de la fraise-scie 17, un point A placé en permanence au bord de la fraise-scie 17 sera animé d'un mouvement oscillatoire d'amplitude $\underline{2d}$ le long d'un axe fixe joignant le point A au point G. Le point A oscillera entre une position A1 distante de R + d du point G et une position A2 distante de R - d du point G. L'amplitude de l'oscillation et la vitesse d'oscillation augmentent lorsque $\underline{d}$ augmente. Sur la figure 3, l'axe fixe et l'axe ZZ' qui passe par le plan médian du ruban capacitif 11. Ce n'est qu'un exemple.

Les cercles en pointillés matérialisent quatre positions différentes de la fraise-scie 17 au cours de sa rotation.

Grâce à ce mouvement oscillatoire chaque copeau est dégagé entièrement sans abîmer la surface de coupe du ruban capacitif 11. Les courts-circuits engendrés par la coupe traditionnelle décrite aux figures 1A et 1B sont supprimés. Dans cette configuration, seules une ou plusieurs dents 19 travaillent effectivement à couper. Les autres 20 ne servent qu'à dégager les copeaux. Celles qui travaillent 19 à couper sont celles qui sont les plus éloignées du point de rotation G.

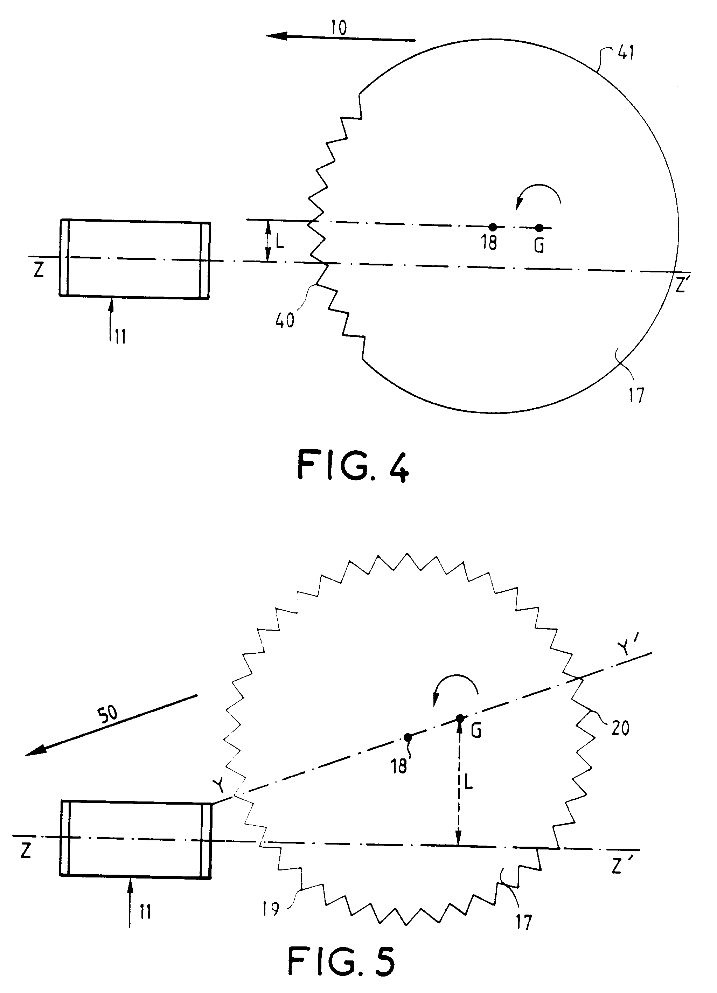

En conséquence, la fraise-scie 17 peut comporter une denture seulement sur une partie de sa périphérie. C'est ce qui est représenté sur la figure 4. Les dents référencées 40 sont situées sur la partie de la périphérie la plus éloignée du point de rotation G. Le reste 41 de la périphérie ne comporte pas de dent.

Les dents 40, en attaquant la matière du ruban capacitif 11, produisent des copeaux qui sont dégagés par le bord de la fraise-scie 17 même si ce bord et sans dent.

Selon une autre variante, représentée aussi à la figure 4, on peut imaginer que l'axe de rotation et donc le point G soient décalés par rapport au plan médian du ruban capacitif 11. De préférence, l'axe de rotation est situé au dessus du plan médian du ruban capacitif 11, pour favoriser le dégagement des copeaux et pour éviter le phénomène de bavures. Sur la figure il est éloigné d'une distance L.

L'avance de la fraise-scie 17 se fait, de préférence, dans une direction 10 parallèle au plan médian du ruban capacitif 11. On peut envisager que l'avance se fasse dans une direction oblique par rapport au plan médian. La figure 5 représente cette variante. La direction d'avance, notée 50, est sécante avec le plan médian du ruban capacitif 11. Sur la figure 5, cette direction 50 est sensiblement parallèle à un axe, noté YY', joignant le point de rotation G au point d'attaque de la fraise-scie 17 sur le ruban capacitif 11. Ce point d'attaque est une arrête du ruban capacitif 11. D'autres directions sont tout à fait envisageables.

Le procédé de fabrication selon l'invention donne toute satisfaction si moins de la moitié de la périphérie comporte des dents utilisées à couper.

Soit A l'avance de la fraise-scie en millimètre par seconde, soit N sa vitesse de rotation en tour par seconde, soit $d$ la distance séparant le centre de la fraise-scie de son point G de rotation, soit k le pourcentage de périphérie comportant des dents utilisées à couper. La distance $d$ est supérieure ou égale à: (1-k). A/N

Des essais montrent que les meilleurs résultats sont obtenus lorsque:

k  = 15 %
A  = 100 mm/s
N  = 9000 tours par minute, soit 150 tours par seconde.

On obtient une distance $d$ supérieure ou égale à 0,56 mm.

Les fraises-scies fréquemment employées ont un diamètre d'environ 100 mm.

## Revendications

1 - Procédé de fabrication d'un condensateur feuilleté, découpé en bloc unitaire par une fraise-scie (17) circulaire dans un ruban capacitif (11), caractérisé en ce que la fraise-scie (17) tourne autour d'un axe passant par un point de rotation (G) décalé par rapport au centre (18) de la fraise-scie (17).

2 - Procédé de fabrication d'un condensateur feuilleté selon la revendication 1, le ruban capacitif (11) comportant sur deux flancs opposés des armatures métalliques (5), caractérisé en ce que la direction d'avance de la fraise-scie (17) est sensiblement normale aux armatures (5).

3 - Procédé de fabrication d'un condensateur feuilleté selon l'une des revendications 1 ou 2, caractérisé en ce que l'axe de rotation de la fraise-scie (17) est situé dans un plan médian du ruban capacitif (11) à découper.

4 - Procédé de fabrication d'un condensateur feuilleté selon l'une des revendications 1 ou 2, caractérisé en ce que l'axe de rotation de la fraise-scie (17) est décalé par rapport à un plan médian du ruban capacitif (11) à découper.

5 - Procédé de fabrication d'un condensateur feuilleté selon la revendication 4, caractérisé en ce que l'axe de rotation de la fraise-scie (17) est situé au dessus du plan médian du ruban capacitif (11) à découper.

6 - Procédé de fabrication d'un condensateur feuilleté selon l'une des revendications 1 à 5, caractérisé en ce que la direction d'avance de la fraise-scie (17) est sensiblement parallèle au plan médian du ruban capacitif (11) à découper.

7 - Procédé de fabrication d'un condensateur selon l'une des revendications 1 à 5, caractérisé en ce que la direction d'avance de la fraise-scie (17) est oblique par rapport au plan médian du ruban capacitif (11) à découper.

8 - Procédé de fabrication d'un condensateur selon l'une des revendications 1 à 7, caractérisé en ce que la fraise-scie (17) comporte, sur une partie de sa périphérie la plus éloignée du point de rotation (G), une ou plusieurs dents (19) utilisées pour couper.

9 - Procédé de fabrication d'un condensateur selon la revendication 8, caractérisé en ce que le reste de la périphérie de la fraise-scie (17) comporte aussi une ou plusieurs dents (20).

10 - Procédé de fabrication d'un condensateur selon la revendication 8, caractérisé en ce que le reste de la périphérie de la fraise scie (17) est exempte de dents.

11 - Procédé de fabrication d'un condensateur selon l'une des revendications 8 à 10, caractérisé en ce que la distance $d$ entre le centre (18) de la fraise-scie (17) et le point de rotation (G) est supérieur ou égale à :

$$(1 - k) . A/N$$

k étant le pourcentage de périphérie comportant une ou plusieurs dents utilisées pour couper, A étant l'avance de la fraise-scie en millimètre par seconde et N la vitesse de rotation de la fraise-scie en tour par seconde.

# FIG.1A

# FIG.1B

FIG. 2A

FIG. 2 B

FIG. 3

FIG. 4

FIG. 5

8

EP 0 543 701 A1

**European Patent Office**     **EUROPEAN SEARCH REPORT**     Application Number

EP 92 40 3027

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-A-3 822 180 (SIEMENS) * the whole document * * claims 1-4; figures 1-3 * | 1-8 | H01G4/30 B26D1/143 |
| Y | PATENT ABSTRACTS OF JAPAN vol. 14, no. 26 (M-921)18 January 1990 & JP-A-1 264 804 ( MASAMI NOGUCHI ) 23 October 1989 * abstract * | 1-8 | |
| A | PATENT ABSTRACTS OF JAPAN vol. 15, no. 94 (E-1041)6 March 1991 & JP-A-2 305 423 ( MATSUSHITA ELECTRIC ) 19 December 1990 * abstract * | | |
| A | DE-U-8 513 383 (FESTO) | | |

TECHNICAL FIELDS SEARCHED (Int. Cl.5)

H01G
B23D

The present search report has been drawn up for all claims

| Place of search | Date of completion of the search | Examiner |
|---|---|---|
| THE HAGUE | 21 JANUARY 1993 | PUHL A.T. |

EPO FORM 1503 03.82 (P0401)